# EUROPÄISCHE PATENTANMELDUNG

(11) **EP 4 148 298 A1**
(43) Veröffentlichungstag der Anmeldung: **15.03.2023**
(21) Anmeldenummer: 21196239.4
(22) Anmeldetag: 13.09.2021
(51) Int. Cl.: F16H 1/28

(54) **GETRIEBEVORRICHTUNG FÜR EINE WERKZEUGMASCHINE**

(71) Anmelder: Hilti Aktiengesellschaft, 9494 Schaan (LI)
(72) Erfinder: Knyrim, Maximilian, 89584 Ehingen (DE); Schmid, Florian, 9470 Buchs SG (CH)
(74) Vertreter: Hilti Aktiengesellschaft Corporate Intellectual Property

(57) **Zusammenfassung**

Werkzeugmaschine, insbesondere eine Rohrpresse, enthaltend einen Antrieb zum Erzeugen eines Drehmoments, eine Abtriebswelle und eine Getriebevorrichtung für eine Drehmomentanpassung zwischen dem Antrieb und der Abtriebswelle.

Die Getriebevorrichtung enthält eine Planetenzahnradeinrichtung mit einem ersten Planetenzahnrad zum simultanen Eingriff in ein erstes Hohlrad mit einem ersten Durchmesser und ein zweites Hohlrad mit einem zweiten Durchmesser, wobei das zweite Hohlrad zum Antreiben der Abtriebswelle angeordnet ist.

## Beschreibung

Die Erfindung betrifft eine Werkzeugmaschine, insbesondere eine Rohrpresse, enthaltend einen Antrieb zum Erzeugen eines Drehmoments, eine Abtriebswelle und eine Getriebevorrichtung für eine Drehmomentanpassung zwischen dem Antrieb und der Abtriebswelle.

Aus dem Stand der Technik sind unterschiedliche Werkzeugmaschinen für Umform- und Schneideprozesse bekannt. Mit Hilfe dieser speziellen Werkzeugmaschinen können beispielsweise Armierungseisen durchtrennt, Rohre mechanisch verbunden oder Schlauchschellen aufgepresst werden. Zu den Aufgaben des mechanischen Verbindens gehört auch das sogenannte Crimpen, Bördeln und Quetschen.

Um die erforderlichen hohen Presskräfte für beispielsweise das Crimpen von Stahlrohren zu realisieren, verfügen die am Markt erhältlichen Umformmaschinen einen von einem Presszylinder angetriebenen Presskopf. Häufig wird dabei der Presszylinder zum Bewegen des Presskopfs hydraulisch angetrieben. Ein Elektromotor treibt wiederum eine Hydraulikpumpe an, welche die Linearbewegung des Presszylinders abtreibt. Alternativ sind auch mechanische Press/Schneide und Crimptools am Markt erhältlich, welche statt der Hydraulik den Pressdruck über einen Gewindespindeltrieb in Kombination mit einem Elektromotor erzeugen. Hierbei wird die Rotationsbewegung des Elektromotors über eine Gewindespindel in eine lineare Bewegung transformiert. Häufig enthalten diese Werkzeugmaschine ein zwischen Spindel und Elektromotor geschaltetes Getriebe zur Reduktion des erforderlichen Motordrehmoments und um dadurch den Motor kleiner dimensionieren zu können.

Die aus dem Stand der Technik bekannten Werkzeugmaschinen mit hydraulisch angetriebenen Linearaktuator neigen jedoch in der Entwicklung bzw. im Aufbau zu komplex zu sein. Insbesondere das Getriebe dieser Werkzeugmaschinen ist oftmals zu groß, zu schwer und insgesamt zu komplex. Aufgrund der Komplexität können diese Getriebe auch häufig störanfällig und wartungsintensiv sein.

Die vorliegende Erfindung stellt sich daher die Aufgabe das vorstehend beschriebene Problem zu lösen und dabei eine Werkzeugmaschine, insbesondere eine Rohrpresse bereitzustellen, welche ein einfacheres sowie robustes Getriebe enthält.

Die Aufgabe wird insbesondere gelöst durch den Gegenstand gemäß Anspruch 1 und speziell durch eine Werkzeugmaschine, insbesondere eine Rohrpresse, enthaltend einen Antrieb zum Erzeugen eines Drehmoments, eine Abtriebswelle und eine Getriebevorrichtung für eine Drehmomentanpassung zwischen dem Antrieb und der Abtriebswelle.

Erfindungsgemäß enthält die Getriebevorrichtung eine Planetenzahnradeinrichtung mit einem ersten Planetenzahnrad zum simultanen Eingriff in ein erstes Hohlrad mit einem ersten Durchmesser und ein zweites Hohlrad mit einem zweiten Durchmesser, wobei das zweite Hohlrad zum Antreiben der Abtriebswelle angeordnet ist. Hierdurch ist nicht nur ein relativ einfacher, sondern auch robuster Aufbau für eine Getriebevorrichtung Werkzeugmaschine, insbesondere eine Rohrpresse, gegeben.

Gemäß einer weiteren vorteilhaften Ausführungsform der vorliegenden Erfindung kann es möglich sein, dass die Planetenzahnradeinrichtung ein zweites Planetenzahnrad enthält, wobei das erste und zweite Planetenzahnrad miteinander gekoppelt sind und das zweite Planetenzahnrad zum Eingriff in das zweite Hohlrad und zum Antreiben der Abtriebswelle ausgestaltet ist. Hierdurch kann unter anderem die Anzahl an beweglichen Bauteilen reduziert werden.

Entsprechend einer weiteren vorteilhaften Ausführungsform der vorliegenden Erfindung kann es möglich sein, dass das erste oder zweite Hohlrad gestellfest angeordnet ist. Gestellfest bedeutet in diesem Zusammenhang, dass das erste oder zweite Hohlrad drehfest bzw. fest mit dem Gehäuse der Werkzeugmaschine verbunden ist.

Entsprechend einer weiteren vorteilhaften Ausführungsform der vorliegenden Erfindung kann es möglich sein, dass die Getriebevorrichtung wenigstens teilweise aus einem metallischen Sinterwerkstoff besteht. Durch die Verwendung eines Sinterwerkstoffs kann die Gleitfähigkeit der Bauteile, d.h. insbesondere innerhalb der Exzentergetriebevorrichtung gesteigert werden.

Gemäß einer weiteren vorteilhaften Ausführungsform der vorliegenden Erfindung kann es möglich sein, dass die Getriebevorrichtung wenigstens teilweise aus einem Polymer besteht. Durch die Verwendung eines Polymers oder eines Kunststoffs kann die Exzentergetriebevorrichtung günstiger und leichter produziert werden. Darüber hinaus können die Unwucht und Reibung reduziert sowie der Wirkungsgrad erhöht werden.

Weitere Vorteile ergeben sich aus der folgenden Figurenbeschreibung.

In den Figuren sind verschiedene Ausführungsbeispiele der vorliegenden Erfindung dargestellt.

Die Figuren, die Beschreibung und die Patentansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponente und Baugruppen mit gleichen Bezugszeichen beziffert.

Es zeigt:
- Figur 1: eine Seitenansicht auf Werkzeugmaschine in Ausgestaltung einer Rohrpresse
- Figur 2: eine seitliche Schnittansicht auf die Werkzeugmaschine in Ausgestaltung einer Rohrpresse mit der Getriebevorrichtung;
- Figur 3: eine schematische Seitenansicht auf eine Planetenzahnradeinrichtung gemäß einem ersten Ausgestaltungsbeispiel mit einem ersten Planetenzahnrad und einem zweiten Planetenzahnrad; und
- Figur 4: eine schematische Seitenansicht auf die Planetenzahnradeinrichtung gemäß einem zweiten Ausgestaltungsbeispiel mit nur einem ersten Planetenzahnrad.

### Ausführungsbeispiele der Erfindung:

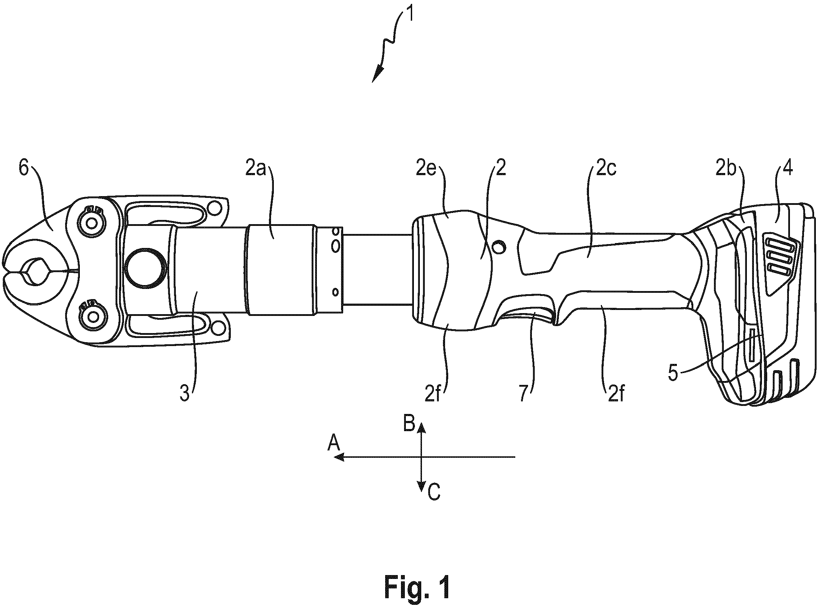

In Figur 1 ist eine erfindungsgemäße Werkzeugmaschine 1 in einer beispielhaften Ausgestaltung als Rohrpresse gezeigt. Anstelle der Ausgestaltung als Rohrpresse kann die Werkzeugmaschine 1 auch als jede andere Schneid- oder Umformwerkzeug ausgestaltet sein. So ist es insbesondere auch möglich, dass die erfindungsgemäße Werkzeugmaschine 1 als Auspressgerät für chemische Substanzen, wie z.B. Klebstoff oder Dübelmasse ausgestaltet ist. Derartige Auspressgeräte könne auch als Dispenser bezeichnet werden.

Wie in Figur 1 zu erkennen ist, weist die als Rohrpresse ausgestaltete Werkzeugmaschine 1 im Wesentlichen ein Gehäuse 2, eine Werkzeugaufnahme 3 und eine Energieversorgung 4 auf.

Wie in Figur 1 angedeutet ist die Werkzeugaufnahme 3 in Pfeilrichtung A vor dem Gehäuse 2 der Werkzeugmaschine 1 angeordnet. Des Weiteren ist das Gehäuse 2 der Werkzeugmaschine 1 in Pfeilrichtung A vor der Energieversorgung 4 angeordnet.

Das Gehäuse 2 der Werkzeugmaschine 1 ist im Wesentlichen zylindrisch ausgestaltet und enthält ein vorderes Ende 2a, ein hinteres Ende 2b, eine linke Seitenfläche 2c, eine rechte Seitenfläche 2d, eine Oberseite 2e und eine Unterseite 2f. Ein mittlerer Anteil 2g des Gehäuses 2 dient als Handgriff zum Halten bzw. Führen der Werkzeugmaschine 1. In Figur 1 ist lediglich die linke Seitenfläche 2c dargestellt.

An dem hinteren Ende 2b des Gehäuses 2 der Werkzeugmaschine 1 ist die Energieversorgung 4 positioniert. Die Energieversorgung 4 ist dabei als Akkumulator (auch Akku oder Batterie genannt) ausgestaltet. Die als Akkumulator ausgestaltete Energieversorgung 4 ist wiederlösbar über eine Schnittstelle 5 mit dem hinteren Ende 2b des Gehäuses 2 der Werkzeugmaschine 1 verbunden werden. Mit Hilfe der als Akkumulator ausgestalteten Energieversorgung 4 wird die Werkzeugmaschine 1 bzw. die elektrischen Verbraucher (d.h. der Antrieb) der Werkzeugmaschine 1 mit elektrischer Energie versorgt.

Gemäß einer alternativen Ausgestaltung der vorliegenden Erfindung kann die Energieversorgung 4 der Werkzeugmaschine 1 auch als Stromkabel ausgestaltet sein zum Verbinden der Werkzeugmaschine 1 mit einer Stromnetzquelle (d.h. Steckdose).

An dem vorderen Ende 2a des Gehäuses 2 der Werkzeugmaschine 1 ist die Werkzeugaufnahme 3 positioniert zum wiederlösbaren Aufnehmen und Halten eines Werkzeugs 6. An der Werkzeugaufnahme 3 ist in dem vorliegenden Ausführungsbeispiel ein Werkzeug 6 in Form eines Umformwerkzeugs positioniert. Das Umformwerkzeug 6 ist im vorliegenden Ausführungsbeispiel als sogenannter Presskopf ausgestaltet. Das als Presskopf ausgestaltete Umformwerkzeug 6 dient im Wesentlichen zum Bearbeiten und insbesondere Umformen von Leitungen, d.h. Rohre und Röhren. Die Leitungen sind in den Figuren nicht gezeigt.

An der Unterseite 2f des Gehäuses 2 der Werkzeugmaschine 1 ist ein Aktivierungsschalter 7 positioniert. Mit Hilfe des Aktivierungsschalters 7 kann die Werkzeugmaschine 1 gestartet und gestoppt werden. Wenn der Aktivierungsschalters 7 durch eine Anwender in Richtung B gedrückt ist, wird die Werkzeugmaschine 1 eingeschaltet bzw. eingeschaltet. Wenn der Anwender hingegen keinen Druck mehr auf den Aktivierungsschalters 7 ausübt, wird der Aktivierungsschalters 7 durch eine Druckfeder wieder in Richtung C gedrückt. Wenn der Aktivierungsschalters 7 wieder in Richtung C gebracht ist, wird die Werkzeugmaschine 1 ausgeschaltet bzw. deaktiviert. In den Figuren ist weder der Anwender noch die Druckfeder gezeigt.

Im Inneren des Gehäuses 2 der Werkzeugmaschine 1 ist im Wesentlichen ein Antrieb 8, eine Antriebswelle 9, eine Getriebevorrichtung 10, eine Abtriebswelle 11, ein Gewindespindeltrieb 12 und ein Linearaktuator 13 positioniert. Der Antrieb 8 ist in dem vorliegenden Ausführungsbeispiel als bürstenloser Elektromotor ausgestaltet.

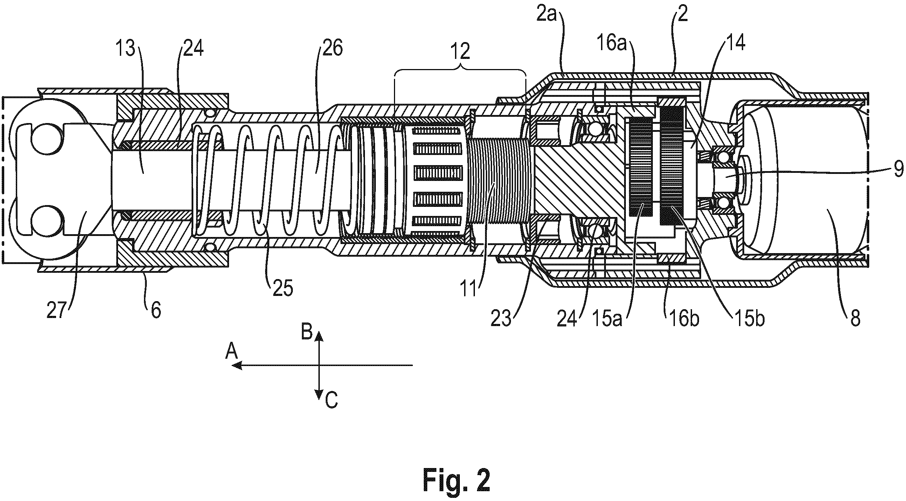

Wie in Figur 2, 3, 6 und 7 dargestellt ist der als bürstenloser Elektromotor ausgestaltete Antrieb 8 über die Antriebswelle 9 mit der Getriebevorrichtung 10 verbunden. Durch die Verbindung mit der Antriebswelle 9 wird ein in dem Antrieb 8 erzeugtes Drehmoment von dem Antrieb 8 auf die Getriebevorrichtung 10 übertragen.

Mit Hilfe der Getriebevorrichtung 10 kann eine Drehzahlübersetzung vom Antrieb 8 auf die Abtriebswelle 11 erzeugt werden.

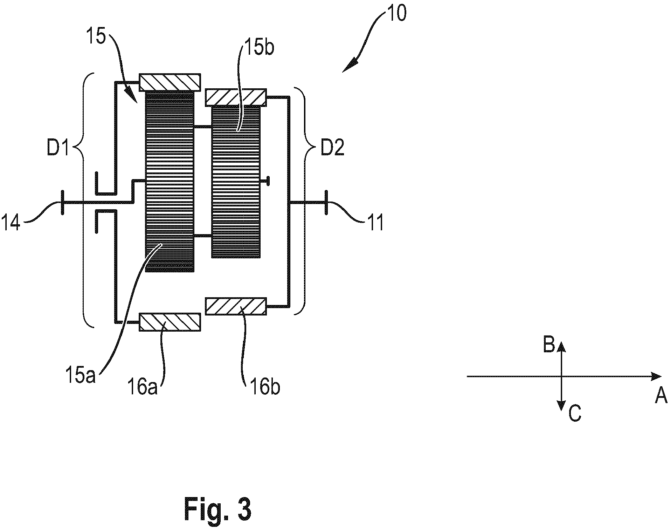

Figur 2 und 3 zeigt die Getriebevorrichtung 10 gemäß einer ersten Ausgestaltungsform, wobei die Getriebevorrichtung 10 eine Planetenzahnradeinrichtung 15 mit einem ersten Planetenzahnrad 15a, zweiten Planetenzahnrad 15b, ersten Hohlrad 16a und einem zweiten Hohlrad 16b enthält. Das erste und zweite Planetenzahnrad 15a, 15b kann auch als Planetenrad bezeichnet werden. Sowohl das erste als auch das zweite Hohlrad 16a, 16b kann auch als Hohlzahnrad bezeichnet werden. Das erste Hohlrad 16a weist einen ersten Durchmesser D1 und das zweite Hohlrad 16b weist einen zweiten Durchmesser D2 auf. Der erste Durchmesser D1 des ersten Hohlrads 16a ist dabei größer als der zweite Durchmesser D2 des zweiten Hohlrads 16b. Das erste Planetenzahnrad 15a und insbesondere der Durchmesser des ersten Planetenzahnrads 15a ist dabei so ausgestaltet, dass das erste Planetenzahnrads 15a entsprechend in erste Hohlrad 16a passt bzw. das erste Planetenzahnrad 15a in das erste Hohlrad 16a eingreifen kann. Das zweite Planetenzahnrad 15b und insbesondere der Durchmesser des zweiten Planetenzahnrads 15b ist wiederum so ausgestaltet, dass das zweite Planetenzahnrads 15b entsprechend in zweite Hohlrad 16b passt bzw. das zweite Planetenzahnrad 15a in das zweite Hohlrad 16b eingreifen kann.

Wie insbesondere in Figur 3 ersichtlich ist der Antrieb 8 über die Antriebswelle 9 und einen Antriebsexzenter 14 mit dem ersten Planetenzahnrad 15a verbunden, sodass ein in dem Antrieb 8 erzeugtes Drehmoment zunächst auf die Antriebswelle 9 und dann auf die Antriebsexzenter 14 übertragen wird. Der Antriebsexzenter 14 überträgt dann wieder das Drehmoment auf das erste Planetenzahnrad 15a. Das erste Planetenzahnrad 15a ist drehfest mit dem zweiten Planetenzahnrad 15b verbunden, sodass das Drehmoment von dem ersten Planetenzahnrad 15a auf das zweite Planetenzahnrad 15b übertragen wird. Wie bereits vorstehend beschrieben ist das zweite Planetenzahnrad 15b in dem zweiten Hohlrad 16b positioniert. Durch die Positionierung des zweiten Planetenzahnrads 15b in dem zweiten Hohlrad 16b wird das Drehmoment von dem zweiten Planetenzahnrad 15b auf das zweite Hohlrad 16b übertragen. Das zweite Hohlrad 16b ist wiederum mit einem Abtriebswelle 11 so verbunden, dass das Drehmoment von dem zweiten Planetenzahnrad 15b über das zweite Hohlrad 16b auf die Abtriebswelle 11 übertragen wird.

Das erste Hohlrad 16a ist gestellfest bzw. drehfest mit dem Gehäuse 2 mit der Innenseite des Gehäuses 2 der Werkzeugmaschine 1 verbunden.

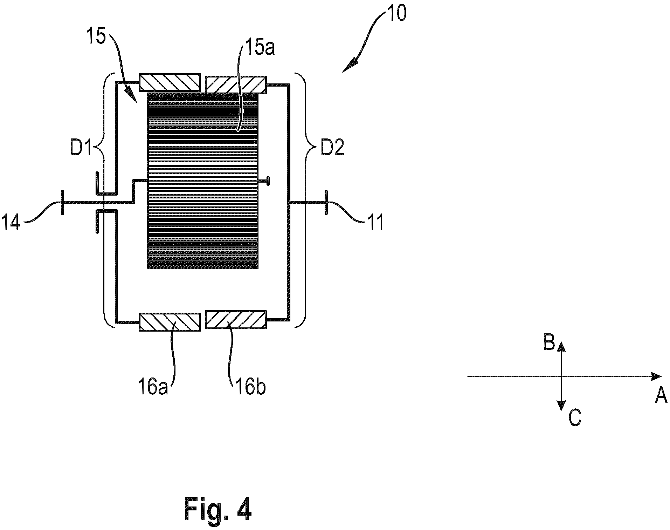

Figur 4 zeigt die Getriebevorrichtung 10 gemäß einer zweiten Ausgestaltungsform. Die Getriebevorrichtung 10 gemäß der zweiten Ausgestaltungsform entspricht dabei im Wesentlich der Getriebevorrichtung 10 gemäß der ersten Ausgestaltungsform. Die Getriebevorrichtung 10 gemäß der zweiten Ausgestaltungsform enthält ebenfalls eine Planetenzahnradeinrichtung 15 mit ersten Hohlrad 16a und einem zweiten Hohlrad 16b. Die Ausgestaltung des ersten Hohlrads 16a und des zweiten Hohlrads 16b für die Getriebevorrichtung 10 gemäß der zweiten Ausgestaltungsform ist dabei im Wesentlichen identisch zu der Ausgestaltung des ersten Hohlrads 16a und des zweiten Hohlrads 16b für die Getriebevorrichtung 10 gemäß der ersten Ausgestaltungsform. Die Getriebevorrichtung 10 gemäß der zweiten Ausgestaltungsform enthält im Unterschied zu der Getriebevorrichtung 10 gemäß der ersten Ausgestaltungsform lediglich ein (erstes) einziges Planetenzahnrad 15a, anstelle von einem ersten Planetenzahnrad 15a und zweiten Planetenzahnrad 15b, vgl. Figur 4. Das erste bzw. einzige Planetenzahnrad 15a der Getriebevorrichtung 10 gemäß der zweiten Ausgestaltungsform ist dabei so ausgestaltet, dass das Planetenzahnrad 15a sowohl in das erste Hohlrad 16a als auch in das zweite Hohlrad 16b eingreifen kann. Bei der Ausgestaltung des ersten bzw. einzigen Planetenzahnrads 15a ist dabei der Durchmesser, die Breite sowie die Anzahl an Zähnen gemeint, damit das Planetenzahnrad 15a entsprechend in das erste und zweite Hohlrad 16a, 16b eingreifen bzw. die Zähne des Planetenzahnrads 15a in die Verzahnung des ersten und zweiten Hohlrad 16a, 16b eingreifen kann. Wie in Figur 4 ersichtlich ist die der Antrieb 8 über die Antriebswelle 9 und einen Antriebsexzenter 14 mit dem ersten Planetenzahnrad 15a verbunden, sodass ein in dem Antrieb 8 erzeugtes Drehmoment zunächst auf die Antriebswelle 9 und dann auf die Antriebsexzenter 14 übertragen wird. Der Antriebsexzenter 14 überträgt dann wieder das Drehmoment auf das erste Planetenzahnrad 15a. Das erste bzw. einzige Planetenzahnrad 15a überträgt das Drehmoment auf das zweite Hohlrad 16b, wodurch das zweite Hohlrad 16b angetrieben wird.

Das Hohlrad 16a weist einen Durchmesser D1 von 100 mm auf und das Hohlrad 16b weist einen Durchmesser D2 von 80 mm.

Die Abtriebswelle 11 weist im Wesentlichen eine zylindrische Form auf. Mit Hilfe eines Hauptlagers 23 und Sekundärlagers 24 ist die Abtriebswelle 11 im Inneren des Gehäuses 2 der Werkzeugmaschine 1 gelagert. Das Hauptlager 23 ist als Wälzlager bzw. Kugellager und das Sekundärlager 24 ist als Gleitlager ausgestaltet. Gemäß eines alternativen Ausführungsbeispiels kann sowohl das Hauptlager 23 als auch das Sekundärlager 24 entweder als Wälzlager oder Gleitlager ausgestaltet sein. Entsprechend einer alternativen Ausgestaltungsform kann auch lediglich nur ein einziges Lager vorgesehen sein.

Wie bereits vorstehend beschrieben ist die Abtriebswelle 11 mit der Getriebevorrichtung 10 verbunden. Die Abtriebswelle 11 grenzt an den Gewindespindeltrieb 12 an. Der Gewindespindeltrieb 12 ist dabei mit der Abtriebswelle 11 verbunden. Durch den Gewindespindeltrieb 12 kann die Drehbewegung der Abtriebswelle 11 in eine Linearbewegung umgewandelt werden.

Wie der Figuren 2 entnommen werden kann ist der Gewindespindeltrieb 12 mit dem Linearaktuator 13 verbunden.

Der Linearaktuator 13 enthält im Wesentlichen eine Druckfeder 25 sowie eine Schubstange 26. Die Druckfeder 25 agiert dabei als Rückstellfeder für den Linearaktuator 13.

An dem Linearaktuator 13 ist eine Kraftflussumlenkungseinrichtung 27 vorgesehen. Mit Hilfe des Linearaktuators 13 und der Kraftflussumlenkungseinrichtung 27 wird die lineare Kraft des Linearaktuators 13 so auf die Werkzeugaufnahme 3 übertragen, dass das als Presskopf ausgestaltete Werkzeug 6 zwischen einer geöffneten und geschlossenen Position bewegt werden kann.

Der als Elektromotor ausgestaltete Antrieb 8 kann bei einer maximalen Ausfahr- und Einfahrgeschwindigkeit des Linearaktuators 13 mit einem Drehzahlwert zwischen 10.000 und 30.000 rpm (= revs per minute = Umdrehungen pro Minute) dreht. Insbesondere ist ein Drehzahlwert zwischen 15.000 bis 18.000 rpm für den Antrieb 8 vorgesehen.

### Bezuaszeichenliste

- 1: Werkzeugmaschine
- 2: Gehäuse
- 2a: vorderes Ende des Gehäuses
- 2b: hinteres Ende des Gehäuses
- 2c: linke Seitenfläche des Gehäuses
- 2d: rechte Seitenfläche des Gehäuses
- 2e: Oberseite des Gehäuses
- 2f: Unterseite des Gehäuses
- 3: Werkzeugaufnahme
- 4: Energieversorgung
- 5: Schnittstelle
- 6: Werkzeug
- 7: Aktivierungsschalter
- 8: Antrieb
- 9: Antriebswelle
- 10: Getriebevorrichtung
- 11: Abtriebswelle
- 12: Gewindespindeltrieb
- 13: Linearaktuator
- 14: Antriebsexzenter
- 15: Planetenzahnradeinrichtung
- 15a: erstes Planetenzahnrad
- 15b: zweites Planetenzahnrad
- 16a: erstes Hohlrad
- 16b: zweites Hohlrad
- 23: Hauptlager
- 24: Sekundärlager
- 25: Druckfeder
- 26: Schubstange
- 27: Kraftflussumlenkungseinrichtung
- D1: Durchmesser des ersten Hohlrads
- D2: Durchmesser des zweiten Hohlrads

## Patentansprüche

1. Werkzeugmaschine (1), insbesondere eine Rohrpresse, enthaltend einen Antrieb (8) zum Erzeugen eines Drehmoments, eine Abtriebswelle (11) und eine Getriebevorrichtung (10) für eine Drehmomentanpassung zwischen dem Antrieb (8) und der Abtriebswelle (11),
**dadurch gekennzeichnet, dass** die Getriebevorrichtung (10) eine Planetenzahnradeinrichtung (15) mit einem ersten Planetenzahnrad (15a) zum simultanen Eingriff in ein erstes Hohlrad (16a) mit einem ersten Durchmesser (D1) und ein zweites Hohlrad (16b) mit einem zweiten Durchmesser (D2) enthalten ist, und wobei das zweite Hohlrad (D2) zum Antreiben der Abtriebswelle (11) angeordnet ist.

2. Werkzeugmaschine (1) nach Anspruch 1,
**dadurch gekennzeichnet, dass** die Planetenzahnradeinrichtung (15) ein zweites Planetenzahnrad (15b) enthält, wobei das erste und zweite Planetenzahnrad (15a, 15b) miteinander gekoppelt sind und das zweite Planetenzahnrad (15b) zum Eingriff in das zweite Hohlrad (16b) und zum Antreiben der Abtriebswelle (11) ausgestaltet ist.

3. Werkzeugmaschine (1) nach Anspruch 1 oder 2,
**dadurch gekennzeichnet, dass** das erste oder zweite Hohlrad (16a, 16b) gestellfest angeordnet ist.
